# EUROPEAN PATENT APPLICATION

(11) **EP 3 772 170 A1**
(43) Date of publication of application: **03.02.2021**
(21) Application number: 19189147.2
(22) Date of filing: 30.07.2019
(51) Int. Cl.: H02M 7/493, H02M 3/335, H02M 1/00, H02M 7/48

(54) **LLC CONVERTER HAVING A PLURALITY OF INVERTERS**

(71) Applicant: Delta Electronics (Thailand) Public Co., Ltd., Samutprakarn 10280 (TH)
(72) Inventor: Henkenius, Carsten, 33102 Padderborn (DE)
(74) Representative: Keller Schneider Patent- und Markenanwälte AG (Bern)

(57) **Abstract**

An LLC converter comprises a plurality of inverters each having a first output node and a second output node. The LLC converter further comprises a series resonant circuit comprising a resonant capacitor, a transformer, and an inductor. The resonant capacitor or the transformer is connected to the first output node of each inverter. The inductor of the series resonant circuit of the LLC converter comprises a plurality of magnetically coupled windings each connected in a one-to-one connection to the second output node of an inverter for balancing the current through each inverter.

## Description

### Technical Field

The invention relates to a LLC converter comprising a plurality of inverters each having a first output node and a second output node. The LLC converter further comprises a series resonant circuit comprising a resonant capacitor, a transformer, and an inductor, with all of them connected in series. The resonant capacitor or the transformer are connected to the first output node of each inverter.

### Background Art

LLC converters are a form of series resonant converters providing a DC output voltage isolated from a DC input voltage. LLC converters comprise a series resonant circuit having an inductor, a transformer (or at least a primary winding thereof), and a resonant capacitor, with all of them connected in series. A primary switching circuit (also referred to as inverter) alternately connects a node of the resonant circuit (also called the LLC tank or resonant tank circuit) to a positive supply voltage or to ground in order to provide an alternating resonant current flow through the transformers primary winding. A secondary switching circuit, as for example a rectification circuit, provides an output voltage to a load.

Usually, LLC converters are designed and optimized for a specific power rating, i.e. to deliver a specific predefined amount of power. In applications requiring an amount of power being a multiple of a power rating of such a single LLC converter, a plurality of such single LLC converters is connected in parallel to meet the overall power requirement. This method is called linear component (LLC converter) count scaling. The method has the advantage that proven and optimized components (LLC converters) can be used to obtain virtually any power rating without being required to design a single optimized LLC converter for each power rating.

However, linear component count scaling may lead to an unbalanced current distribution among the single LLC converters caused by unavoidable component tolerances, in particular caused by tolerances of the components of the resonant circuit. As a consequence, some of the single LLC converters may experience overload conditions even if the total power rating of the LLC converter obtained by linear component count scaling is not exceeded, yet.

To solve this problem, EP 2 683 066 (DET International) proposes to use switching frequency control and/or phase-shift control.

In addition, EP 2 683 067 (DET International) proposes to control the input voltage of each single resonant circuit until the power distribution of the single LLC converters becomes balanced.

Currently, there are two methods known for individual voltage settings. The first method utilizes specialized control signals for each individual inverter. These control signals generate periodic voltage gaps (time durations where the inverter output voltage is zero) to adjust the current through the resonant circuit. However, the required time durations are difficult to determine unless the resonant current and/or the voltage across the resonant capacitor is measured. The second method utilizes individual input voltages of each inverter. Since all inverters operate at a fixed transfer ratio, each individual input voltage transfers directly to the input of the resonant circuit. However, this method requires an individual power supply for each inverter.

US 9 819 275 (Rohm Co.) discloses a DC-DC power supply device with three parallel LLC converters each operated at a 120° phase difference to each other. The first resonating inductance of each LLC converter is formed by the leakage inductance of a first transformer. Each first transformer has a separate core. The secondary windings of the first transformers are connected in parallel as to balance the resonating currents of the three LLC converters and, thereby, balancing the power flow through each of the three LLC converters. However, replacing the (first resonating) inductance of the LLC converter by a transformer (and this transformer being needed in addition to the transform providing the galvanic isolation between input and output of the LLC converter) adds complexity, weight and volume to the LLC converter and, thus, leads to a reduced power density.

WO 2018 089771 (Texas Instruments Inc.) discloses a LLC resonant converter with integrated magnetics. An inductor cell is arranged in a stack structure with transformer cells to magnetically couple the transformer's primary windings, the inductor winding and the transformer's secondary windings in a single stacked magnetic circuit to cancel cell to cell flux which significantly reduces the core loss to enhance thermal and electrical efficiency and high power density of the LLC converter. The symmetric structure of each cell also helps the current balancing of secondary parallel winding pairs of each transformer cell. The windings of the resonant inductor and the transformer thus share the magnetic circuit via the integrated stack structure. However, the resonant inductor and the transformer will not magnetically couple with each other. The flux of the resonant inductor can change with the primary current and the flux between transformer and resonant inductor can also be partially cancelled. Thus, there is no solution provided with respect to balancing the currents of a plurality of inverters.

US 2010 0327824 (Dellacona) discloses a power supply using shared flux in a multi-load parallel magnetic circuit. A flux sharing magnetic circuit has a parallel arrangement of secondary flux loops with secondary windings to drive output loads. A shared pool of flux is provided by a primary winding. An AC driven primary winding delivers current to the secondary circuits to maintain a desired voltage or current to a load. One or more control windings control the current in the parallel flux loops and thus control the power delivered to the loads. For example, the efficiency of computer power supplies can be increased by using multiple flux circuits in a magnetic regulator. However, there is no solution provided with respect to balancing the currents of a plurality of inverters.

US 2018 0061560 (Astec International Ltd.) discloses multiple phase power converters having integrated magnetic cores for transformer and inductor windings. The magnetic fluxes generated by the currents flowing in the windings of the transformer substantially cancel each other out. Similarly, the magnetic fluxes generated by the currents flowing in the inductor windings substantially cancel each other out. As a result, the magnetic flux flowing through the magnetic core can be substantially reduced, and in some cases substantially eliminated. This in turn causes a reduction in core losses. The inductor windings may represent inductive elements in a resonant converter such as a LLC power converter. In a balanced three phase system, for example a 120° phase shifted three phase power converter employing the integrated magnetic core, additional outer legs of the integrated magnetic core allow for neutral magnetic flux, i.e. the flux becoming substantially zero. The three primary transformer windings can be connected in a star configuration together with the inductor windings and the resonant capacitors to form the LLC resonant network. As such, the phase currents are inherently balanced due to the star configuration. These balanced phase currents allow for accurate phase shifts without, for example, appropriately matched passive components as for example the resonant capacitors and the inductor windings. However, balancing the currents of inverters is limited to inverters operating at a 120 ° phase shift.

### Summary of the invention

It is the object of the invention to create a LLC converter pertaining to the technical field initially mentioned that allows for balancing the currents through each inverter of a plurality of inverters.

The solution of the invention is specified by the features of claim 1. According to the invention, the inductor of the series resonant circuit of the LLC converter comprises a plurality of magnetically coupled windings each connected in a one-to-one connection to the second output node of an inverter for balancing the current through the inverters.

The advantage thereof is that the inductor with the plurality of magnetically coupled windings inherently balances the current through each inverter. The LLC converter according to the invention does not require any current sensing nor any voltage sensing in order to achieve a balancing of the current through the inverters. Further, the LLC converter according to the invention does not require the inverters to be operated at a specific phase shift. In addition, the LLC converter according to the invention does not require a specific number of inverters, as for example three inverters. Further, all inverters can share a single series resonant circuit, i.e. a single inductor, a single transformer, and a single resonant capacitor. The number of inductor cores does not have to increase with an increase of the nominal power of the LLC converter. Analogously, the number of transformer cores and/or the number of resonant capacitors does not have to increase with an increase of the nominal power of the LLC converter.

Each inverter of the plurality of inverters can be adapted to be operated with a DC input voltage and to provide an AC output voltage. Further, each inverter can be adapted to provide an AC output voltage across a first output node and a second output node of the inverter. In particular, the AC output voltage of each inverter can correspond with the DC input voltage for a first predefined period of time, and/or be zero for a second predefined period of time, and/or can correspond with the inverted (negative) DC input voltage for a third predefined period of time.

The series resonant circuit can comprise a first resonant node and a plurality of second resonant nodes with a series connection of a resonant capacitor, a transformer, and an inductor in between the first resonant node and the second resonant nodes. The first resonant node can be connected to the capacitor or to the transformer. Each second resonant node can be connected to a magnetically coupled winding of the inductor.

The first output node of each inverter can be connected to the first resonant node of the series resonant circuit. In other words, all first output nodes of the inverters can be connected to each other. The second output node of each inverter can be connected to a second resonant node of the plurality of second resonant nodes of the series resonant circuit. In other words, the second output node of each converter and a second resonant node of the series resonant circuit can be connected in a one-to-one connection. In contrast to the first output nodes of the inverters, the second output nodes of the inverters can be void of a connection to each other.

The plurality of inverters corresponds with the plurality of magnetically coupled windings. The plurality of magnetically coupled windings corresponds with a plurality of second resonant nodes. The plurality of inverters corresponds with a plurality of second output nodes of the inverters. Consequently, the plurality of second output nodes corresponds with a plurality of second resonant nodes.

The inductor of the series resonant circuit is different from a transformer. Usually, a transformer comprises a primary winding and a secondary winding which are galvanically isolated from each other. According to the present invention, the inductor is void of a secondary winding, i.e. void of windings which are galvanically isolated from each other. The magnetically coupled windings of the inductor are void of a galvanic isolation from each other. The magnetically coupled windings are connected to each other. For example, one terminal of each magnetically coupled winding can be connected to the resonant capacitor of the resonant series circuit or to the transformer of the resonant series circuit. The remaining terminals of the inductor, i.e. the terminals of the magnetically coupled windings which are not connected to each other can form the plurality of second resonant nodes.

Each winding of the plurality of magnetically coupled windings of the inductor of the series resonant circuit can be adapted to share magnetic flux with each other of the plurality of magnetically coupled windings.

In a preferred embodiment of the LLC converter, the inputs of the inverters are connected in parallel.

The advantage thereof is that a single power supply can be used to supply the LLC converter according to the invention.

However, the inputs of the inverters can be disconnected from each other to use, for example, different power supplies connected to the inverters.

In another preferred embodiment, the LLC converter further comprises a controller adapted to establish output voltages of the inverters which are essentially synchronous.

The advantage thereof is that a single controller with a single control signal can be used to control all inverters of the plurality of inverters. Consequently, the control of the LLC converter according to the invention becomes very simple and cost-effective.

In particular, the controller can be adapted to establish AC output voltages of the inverters which are essentially synchronous.

Alternatively, the LLC converter can comprise a controller adapted to establish output voltages of the inverters which are phase-shifted to each other, for example shifted by 120°.

Also, it is possible that the LLC converter comprises a plurality of controllers.

In another preferred embodiment of the LLC converter, all inverters are identical.

The advantage thereof is that the method of linear component count scaling can be applied for the inverters. This method has the advantage that proven and optimized inverters can be used to obtain virtually any power rating of the LLC converter.

Identical inverters shall be understood as inverters having the same properties and the same design, as for example the same components, the same typology, and the same power rating.

However, it is also possible to use inverters having different properties and/or different designs.

In another preferred embodiment of the LLC converter, each inverter is a single phase inverter.

Single phase inverters have the advantage of a simple design. They are commercially available in a large variety.

However, it is also possible to use multiphase inverters, as for example three-phase inverters.

In another preferred embodiment of the LLC converter, the number of inverters is even. In particular, the number of inverters can be 2, 4, 6, 8, 10, 12, 14, 16, 18 or 20.

The advantage thereof is that the inverters can be arranged in a very compact way, for example in a matrix comprising rows and columns, resulting in a high power density of the LLC converter.

However, it is also possible to use an odd number of inverters.

In another preferred embodiment of the LLC converter, each inverter comprises a bridge.

A bridge can consist of - or comprise - a single or multi-level symmetrical half bridge, and/or a single or multi-level asymmetrical half bridge, and/or a single or multi-level full bridge.

A half bridge may comprise a series connection of two switches, in particular semiconductor switches, as for example transistors.

The advantage thereof is that depending on the particular requirements of the LLC converter the most suitable switching topology can be used.

However, it is also possible to use any other switching topology.

In another preferred embodiment of the LLC converter, each inverter comprises a transistor.

The transistor can be a field effect transistor (FET), a metal oxide semiconductor field effect transistor (MOSFET), an insulated gate bipolar transistor (IGBT), a high electron mobility transistor (HEMT), or a plain bipolar transistor (BT).

It is also possible that each inverter comprises a plurality of transistors. Such transistors can be identical transistors or different transistors, for example combinations of abovementioned transistors.

The advantage thereof is that power switches like FET, MOSFET, IGBT, HEMT and BT are commercially available for a large variety of different requirements, as for example different switching frequencies, or different conduction resistances.

However, it is also possible to use any other semiconductor switch as for example a thyristor.

In another preferred embodiment of the LLC converter, the magnetically coupled windings of the inductor are layered and/or interleaved windings.

The advantage thereof is that such windings can have a good magnetic coupling.

However, it is also possible to use bifilar windings.

Preferably, the magnetically coupled windings of the inductor are tapped windings.

Preferably, the core of the inductor comprises iron, ferrite, cobalt, nickel, and/or combinations thereof.

Preferably, the inductor is a single phase inductor.

In another preferred embodiment of the LLC converter, the magnetically coupled windings of the inductor are arranged on the same section of a core of the inductor.

The advantage thereof is that such windings can be produced very easily and cost-effective.

However, it is also possible that the magnetically coupled windings of the inductor are arranged on different sections of the core of the inductor.

In another preferred embodiment of the LLC converter, the resonant capacitor comprises a single discrete resonant capacitor.

The advantage of the single discrete resonant capacitor is that such a capacitor is available for virtually all requirements in respect of capacity, voltage and frequency.

However, it is also possible that the resonant capacitor comprises multiple discrete resonant capacitors.

It is also possible that the resonant capacitor comprises a single distributed resonant capacitor or multiple distributed resonant capacitors.

The advantage of distributed resonant capacitors is that a discrete resonant capacitor might be omitted if for example a track or conductor path of a printed circuit board of an inverter provides a sufficient capacity and/or if the power switch or switches of the inverter provide a sufficient (parasitic) capacity, and/or if a combination thereof provides a sufficient capacity.

In another preferred embodiment of the LLC converter, the transformer is a single phase transformer.

The advantage thereof is that single phase transformers are commercially available for a large variety of requirements.

However, it is also possible to use multiphase transformers as for example three phase transformers.

In another preferred embodiment of the LLC converter, the transformer comprises a single or a plurality of primary windings, and/or a single or a plurality of secondary windings.

The advantage of a transformer having a single primary winding is the ease of manufacturing. The advantage of a transformer having multiple primary windings is that this transformer can be used in connection with multiple series resonant circuits. The advantage of a transformer having a single secondary winding is again the ease of manufacturing. The advantage of a transformer having multiple secondary windings is that such a transformer can provide different output voltages which are galvanically isolated and/or having different voltage levels due to different winding ratios.

However, it is also possible to use an autotransformer.

In another preferred embodiment of the LLC converter, the LLC converter comprises a rectification circuit

The advantage thereof is that the output voltage or output voltages of the LLC converter can be DC output voltages.

Preferably, the LLC converter comprises a rectification circuit for each secondary winding of the transformer.

However, it is also possible to omit one or more rectification circuits if one or more AC output voltages of the LLC converter are needed.

For example, the rectification circuit can comprise one or more diodes, or one or more controllable semiconductor switches like FETs, MOSFETs, IGBTs, HEMTs and/or IGBTs.

In another preferred embodiment of the LLC converter, the LLC converter comprises an input capacitor and/or an output capacitor.

The advantage thereof is that an input capacitor can for example improve the smoothing of a DC input voltage, while an output capacitor can for example improve the smoothing of a DC output voltage of the LLC converter.

The input capacitor and/or the output capacitor can be electrolytic capacitors.

However, it is also possible to omit an input capacitor and/or an output capacitor.

In another preferred embodiment of the LLC converter, the LLC converter comprises a plurality of series resonant circuits.

The advantage thereof is that the method of linear component count scaling can be applied for the series resonant circuit as well, in particular for the resonant capacitor and the transformer. The method has the advantage that proven and optimized series resonant circuits, in particular resonant capacitors and transforms, can be used to obtain virtually any power rating of the LLC converter. However, all series resonant circuits can share one and the same inductor having a plurality of magnetically coupled windings with one winding thereof associated, i.e. connected, with each series resonant circuit.

In this case, each series resonant circuit of the plurality of series resonant circuits can comprise a (single) first resonant node and a (single) second resonant node with a series connection of a resonant capacitor, a transformer and one winding of the plurality of magnetically coupled windings of the inductor in between the first resonant node and the second resonant node.

The plurality of inverters can correspond with the plurality of series resonant circuits.

The first output node of each inverter of the plurality of inverters can be connected to the first resonant node of each series resonant circuit. In other words, the first output node of each inverter of the plurality of inverters and the first resonant node of each series resonant circuit of the plurality of resonant circuits can be connected in a one-to-one connection.

However, it is also possible to use just one single series resonant circuit. It is also possible to use a combination of a first plurality of inverters feeding one single series resonant circuit and a second plurality of inverters feeding a second plurality of series resonant circuits. The total number of resonant circuits can be equal or smaller than the total number of inverters.

Other advantageous embodiments and combinations of features come out from the detailed description below and the entirety of the claims.

### Brief description of the drawings

The drawings used to explain the embodiments show:
- Fig. 1: a first embodiment of the LLC converter according to the invention,
- Fig. 2: a first embodiment of the inductor of the series resonant circuit,
- Fig. 3: a second embodiment of the inductor of the series resonant circuit,
- Fig. 4: a third embodiment of the inductor of the series resonant circuit, and
- Fig. 5: a second embodiment of the LLC converter according to the invention.

In the figures, the same components are given the same reference symbols.

### Preferred embodiments

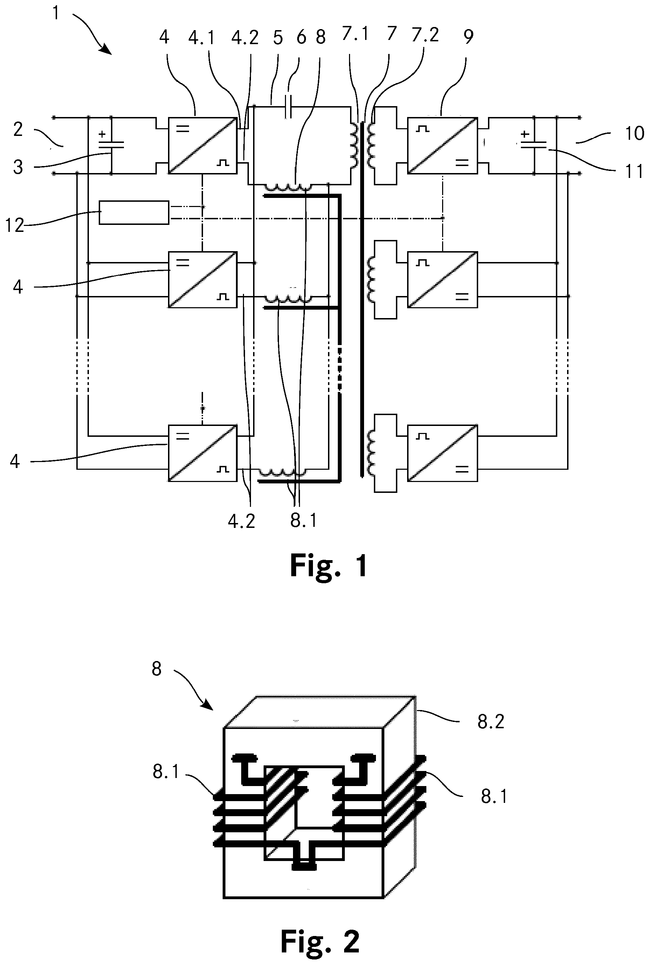

Fig. 1 shows a first embodiment of the LLC converter 1 according to the invention. The LLC converter input 2 can be connected to a DC voltage supply (not shown) to operate the LLC converter 1. An optional input capacitor 3 is connected to the LLC converter input 2. In this embodiment, the input capacitor 3 is an electrolytic capacitor. The LLC converter input 2 is further connected to a plurality of inverters 4. In this embodiment, the inputs of the inverters 4 are connected in parallel so that one single DC voltage supply (not shown) can supply all inverters 4 of the LLC converter 1. Each inverter 4 can invert the supplied DC input voltage to deliver in operation an AC output voltage between a first output node 4.1 and a second output node 4.2. A series resonant circuit 5 is connected to the first output nodes 4.1 and a second output node 4.2 of the inverters 4. The series resonant circuit 5 comprises a series connection of a resonant capacitor 6, a transformer 7 and an inductor 8. In this embodiment, the first output nodes 4.1 of the inverters 4 are connected to each other and to the resonant capacitor 6. The conductor 8 comprises a plurality of magnetically coupled windings 8.1. While one terminal of each of the magnetically coupled windings 8.1 is connected - in this embodiment - to the transformer 7, the other terminal of each of the magnetically coupled windings 8.1 is connected to a second node 4.2 of the inverters 4. In this embodiment, the transformer 7 has one primary winding 7.1 and a plurality of secondary windings 7.2. The primary winding 7.1 is connected to the resonant capacitor 6 and to the inductor 8. Each secondary winding 7.2 of the transformer 7 is connected to a rectification circuit 9 of a plurality of rectification circuits 9. Each rectification circuit 9 rectifies the AC voltage across each secondary winding 7.2 of transformer 7 into a DC output voltage at the LLC converter output 10. In this embodiment, all outputs of the rectification circuits 9 are connected in parallel. An optional output capacitor 11 is connected to the LLC converter output 10. In this embodiment, the output capacitor 11 is an electrolytic capacitor. An optional controller 12 can control the inverters 4 as to deliver synchronous AC output voltages between the first output node 4.1 and the second output node 4.2 of each inverter 4. Optionally, the controller 12 can also control the rectification circuits 9 as to achieve a predetermined DC output voltage at the LLC converter output 10.

Fig. 2 shows a first embodiment of the inductor 8 of the series resonant circuit 5. The inductor 8 comprises a core 8.2 and a plurality of magnetically coupled windings 8.1. One terminal of each magnetically coupled winding is connected to one terminal of each of the other magnetically coupled windings. Each winding of the plurality of magnetically coupled windings 8.1 is arranged on a different section of the core 8.2. The magnetically coupled windings 8.1 are arranged on the core 8.2 as to balance the current through each inverter 4 of the LLC converter 1.

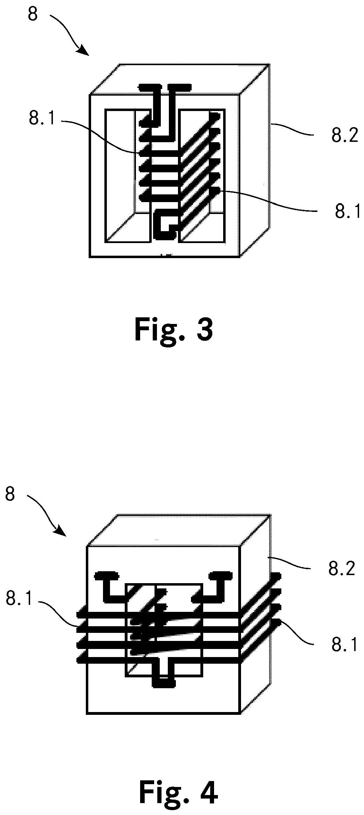

Fig. 3 shows a second embodiment of the inductor 8 of the series resonant circuit 5. Other than in Fig. 2, in this embodiment the magnetically coupled windings 8.1 are arranged on one and the same section of the core 8.2.

Fig. 4 shows a third embodiment of the inductor 8 of the series resonant circuit 5. In this embodiment, the magnetically coupled windings 8.1 are arranged on the core 8.2 in an interleaved way.

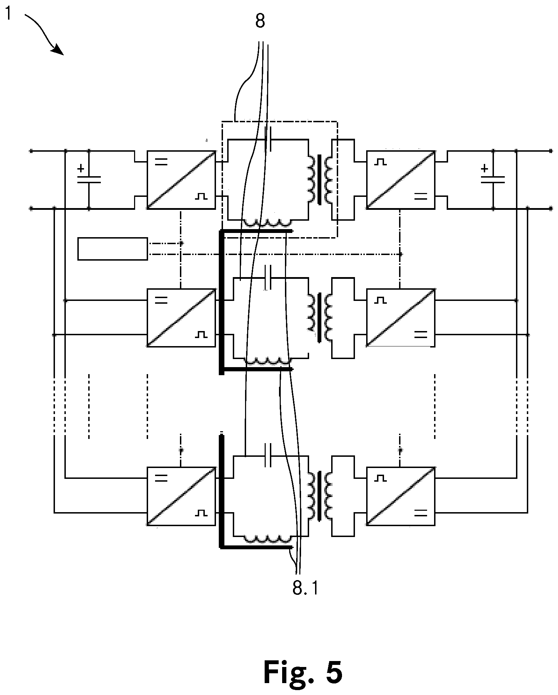

Fig. 5 shows a second embodiment of the LLC converter 1 according to the invention. In contrast to the first embodiment shown in Fig 1, the LLC converter 1 according to this embodiment comprises a plurality of series resonant circuits 5. Each series resonant circuit 5 comprises one winding 8.1 of the plurality of magnetically coupled windings 8.1 of the inductor 8.

In summary, it is to be noted that the LLC converter according to the invention allows for balancing the currents through each inverter of a plurality of inverters by using an inductor having a plurality of magnetically coupled windings.

It is possible to combine the different embodiments described in the dependent claims and the figures to create a large variety of embodiments covered by the scope of independent claim 1.

## Claims

1. LLC converter (1) comprising
a) a plurality of inverters (4) each having a first output node (4.1) and a second output node (4.2), and
b) a series resonant circuit (5) comprising
i. a resonant capacitor (6),
ii. a transformer (7), and
iii. an inductor (8),
with all of them connected in series, and
with the resonant capacitor (6) or the transformer (7) connected to the first output node (4.1) of each inverter (4),
and **characterized in that**
c) the inductor (8) comprises a plurality of magnetically coupled windings (8.1) each connected in a one-to-one connection to the second output node (4.2) of an inverter (4) for balancing the current through the inverters (4).

2. LLC converter (1) according to the preceding claim, wherein the inputs of the inverters (4) are connected in parallel.

3. LLC converter (1) according to any of the preceding claims, further comprising a controller (12) adapted to establish output voltages of the inverters (4) which are essentially synchronous.

4. LLC converter (1) according to any of the preceding claims, wherein all inverters (4) are identical.

5. LLC converter (1) according to any of the preceding claims, wherein each inverter (4) is a single phase inverter.

6. LLC converter (1) according to any of the preceding claims comprising an even number of inverters (4).

7. LLC converter (1) according to any of the preceding claims, wherein each inverter (4) comprises a bridge.

8. LLC converter (1) according to any of the preceding claims, wherein each inverter (4) comprises a transistor.

9. LLC converter (1) according to any of the preceding claims, wherein the magnetically coupled windings (8.1) of the inductor (8) are layered and/or interleaved windings.

10. LLC converter (1) according to any of the preceding claims, wherein the magnetically coupled windings (8.1) of the inductor (8) are arranged on the same section of a core (8.2) of the inductor (8).

11. LLC converter (1) according to any of the preceding claims, wherein the resonant capacitor (6) comprises a single discrete resonant capacitor.

12. LLC converter (1) according to any of the preceding claims, wherein the transformer (7) is a single phase transformer.

13. LLC converter (1) according to any of the preceding claims, wherein the transformer (7) comprises
a) a single or a plurality of primary windings (7.1), and/or
b) a single or a plurality of secondary windings (7.2).

14. LLC converter (1) according to any of the preceding claims, further comprising a rectification circuit (9).

15. LLC converter (1) according to any of the preceding claims, further comprising an input capacitor (3) and/or an output capacitor (11).

16. LLC converter (1) according to any of the preceding claims, comprising a plurality of series resonant circuits (5).
